# EUROPEAN PATENT APPLICATION

(11) **EP 1 675 022 A1**
(43) Date of publication of application: **28.06.2006**
(21) Application number: 04030451.1
(22) Date of filing: 22.12.2004
(51) Int. Cl.: G06F 17/30

(54) **A method and a system for integrating semantic web services into a existing web service infrastructure**

(71) Applicant: SAP AG, 69190 Walldorf (DE)
(72) Inventor: Drumm, Christian, 66887 Ulmet (DE); Altenhofen, Michael, 76131 Karlsruhe (DE)
(74) Representative: Hössle Kudlek & Partner

(57) **Abstract**

The present invention refers to a method for integrating semantic web services into at least one existing web service infrastructure with an execution environment (10) by placing a proxy component (20) between the execution environment of the existing web service infrastructure and the semantic web services (30) so that the execution environment (10) invoking the proxy component (20) can interact with semantic web services, the proxy component (20) selecting services among the semantic web services based on a predefined goal, composing an executable service from the selected services, executing the executable service and returning the result of the service execution to the execution environment (10). The present invention further comprises an appropriate proxy component, a system for integrating semantic web services into at least one existing web service infrastructure and a computer program.

## Description

### Field of the Invention

The present invention relates generally to the field of semantic web services, and more particularly to a system and a method for integrating semantic web services into at least one existing web service infrastructure.

### Description of the Related Art

A primary goal of a specific architectural style, called service oriented architecture (SOA) is to achieve loose coupling among interacting software agents and to ease the reuse of existing application functionality exposed as (web) services in order to create new functionality or new applications. In addition to that services can also be used as a means of integrating applications across company boundaries. Although the ideas behind the service oriented architecture have been around for several years and different technologies can be used for implementing services, service oriented architecture has gained a lot momentum due to an emergence of XML (Extensible Mark-Up Language) and web services.

A web service is an interface that describes a collection of operations that are network-accessible through standardized XML messaging. A web service is described using a standard, formal XML notion, called its service description. It covers all the details necessary to interact with the service, including message formats, transport protocols and location. The interface hides the implementation details of the service, allowing it to be used independently of the hardware or software platform on which it is implemented and also independently of the programming language in which it is written. Web services fulfil a specific task or a set of tasks. They can be used alone or with other web services to carry out a complex aggregation or a business transaction.

Generally, web services allow companies to reduce the cost of doing e-business, to deploy solutions faster and to open up new opportunities. Web services are based on a common program-to-program communications model, built on existing and emerging standards such as HTTP, XML, SOAP (Simple Object Access Protocol), WSDL (Web Service Description Language) and UDDI (Universal Description, Discovery and Integration). Web services allow applications to be integrated more rapidly, easily and less expensively than before.

Although early use of web services is peer-wise, it still addresses the problem of program-to-program communications including describing, publishing and finding interfaces. And, as the use of web services grows and the industry matures, more dynamic models of application integration will develop. Eventually systems integration through web services will happen dynamically at runtime. Just-in-time integration will herald a new era of business-to-business integration over the Internet.

Although the service oriented architecture, as already mentioned, provides a first approach, it cannot solve all integration problems. Data format mismatches, process mismatches and automatic service compositions are examples of the most difficult ones which still need to be solved.

Currently, a lot of effort is put into research projects in the area of so-called semantic web and semantic web services. The semantic web is an extension of the current web in which information is given well-defined meaning, better enabling computers and people to work in cooperation. This meaning is provided by augmenting resources in the web with meta-data based on several standards like RDF (Resource Description Framework). The infrastructure of the semantic web would allow machines as well as humans to make deductions and organise information. Architectural components of the semantic web include semantics, that means meaning of elements, structure, which means organisation of the elements, and syntax, which corresponds to communication. Semantic web services (SWS) try to combine the semantic web approach with web service technologies with the promise to provide partial solutions to the difficult integration problems mentioned above.

In order to allow an acceptance of semantic web technologies in business applications a clean transition path from current already existing technologies to the future semantic web technologies need to be provided. Therefore, a possible solution for integrating semantic web services into existing web service environments would be desirable.

Currently, most of the large vendors of enterprise application platforms support an usage and development of web services in their applications. In addition to enable developers to develop and deploy services, these suites contain workflow engines, enabling a creation of complex business processes from simple building blocks like simple web services. In the meantime many different languages for a description of complex business process on the basis of simple web services have been developed, as for example WSCI (Web Service Choreography Interface), XLANG, and, one of the most popular, BPEL4WS (Business Process Execution Language for Web Services). Those languages clearly define a data flow as XML documents, a control flow (block structured or transition based), a message flow (web services) and a transaction flow. However, they do not spend much time on specifying how a user may interact with a BPMS (Business Process Management Suite).

As semantic web services can be seen as one of the next evolutionary steps of current web service technology, two scenarios for an adoption of semantic web services in future business applications are possible. Either current web service environments are augmented with semantic web services technology or current web service environments are replaced by semantic web service enabled environments.

As companies have invested a lot of money in IT infrastructures it is much more likely that a transition will take place where first existing environments are augmented with semantic web services technology and thereby, after some time, the semantic web service enabled environment will be achieved. In order to allow such a transition, the semantic web services environment need to be defined flexible enough to support an augmentation of current environments as well as their future replacement.

As main building blocks for semantic web services ontologies, goals, mediators and web service descriptions are specified. Ontologies provide a common terminology used by other components, web service descriptions specify capabilities and interfaces of the services, while mediators are used to overcome interoperability problems. Goals are used to express a client's desire. Goals are achieved by decomposing them into sub-goals and then discover web services capable of achieving the sub-goals. Such a goal decomposition might be a recursive process.

On an abstract level, a semantic web service environment requires (a) a discovery component to discover web services, (b) a mediation component to cope with heterogeneity on both, the data and the process level, (c) a composition component to compose new semantic web services from either existing services or by specifying goals and the necessary composition, and (d) an execution unit for executing the semantic web services after they have been deployed. The mediation component will execute mappings between different data formats and processes that are created during composition. All components of an abstract semantic web service environment need access to a semantic backbone that is offering access to ontologies and reasoning. That means that a central, high-speed network for transporting such information between the different components has to be provided.

In order to enable an adoption of semantic web services within business applications it is necessary to enable a seamless transition from existing web service to semantic web service technology.

### Summary of the Invention

It is therefore an object of the invention to provide a method and a system for integrating semantic web services into existing web service infrastructures.

This object is achieved by proposing a method of integrating semantic web services into at least one existing web service infrastructure with the features of claim 1 and a system with the features of claim 7.

Accordingly, the invention provides a method for integrating semantic web services into at least one existing web service infrastructure with an execution environment by placing a proxy component between the execution environment of the existing web service infrastructure and the semantic web services so that the execution environment invoking the proxy component can utilizes or interact with semantic web services for achieving a predefined goal, the proxy component selecting services among the semantic web services based on the predefined goal, composing an executable service from the selected services, executing the executable service and returning the result of the service execution to the execution environment.

The invoking of the proxy component corresponds to a demand of a specific predefined goal. For each specific goal a user wants to achieve, a goal specific proxy component has to be invoked which is specialized in achieving that specific predefined goal.

The composing of an executable service can be done for example in form of a script. Such a script specifies a sequence of operations to be performed in order to achieve the predefined goal.

A proxy is an intermediary program that acts as both a server and a client for the purpose of making requests on behalf of other clients. Proxies are often used as helper applications for handling requests via protocols not implemented by a user agent. Therefore, a proxy functions as an intermediate link between a client application and a real server. It accepts requests from clients, transmits those requests on to the semantic web services environment.

With help of the proposed method a gradual transition from current already existing web service environments to semantic web service environments is possible. It is possible that a designer of a complex service wants to define some services exactly during design-time and leave others open for discovery during runtime. In the following this scenario is called a mixed usage scenario. Using the semantic web service environment described before, mixed usage scenarios can be enabled by using the method according to the present invention, namely by placing a proxy between the execution environment and the semantic web services. During runtime an execution environment of the existing web service infrastructure, as for example a BPEL (Business Process Execution Language) engine, calls the proxy component instead of a real service. The proxy component then takes care of discovering, selecting and invoking an appropriate semantic web service. These processes are completely transparent to the execution environment. For the execution environment all this functionality is hidden behind a simple web service call. The proxy component is not a generic execution environment but an object capable of discovering, selecting and invoking one specific kind of semantic web services. The proxy component could either be manually developed or customisable service templates could be provided to a designer.

The proxy component is generally controlled by a controller when selecting, composing and executing a semantic web service. This controller is part of the proxy component. That means the controller is integrated within the proxy component.

Furthermore, it is possible that the predefined goal which can be achieved by invoking the proxy component is first divided into several sub-goals. This can be the case if the predefined goal of the proxy component can only be achieved by a composition of several web services, each achieving a specific sub-goal.

In another possible embodiment of the present invention selecting services among the semantic web services is done by invoking a discovery unit which is external to the proxy component and listing the selected services into a list. The discovery unit is part of the semantic web service environment. It can be a semantic web service itself.

Referring, for example, to "book travel" as a predefined goal to be achieved, a specific proxy component is called by an execution environment of an existing web service infrastructure, as for example by a travel portal. The proxy component first searches for a semantic web service based on the predefined goal by invoking a discovery unit which is part of a semantic web service environment. The discovery unit returns services that can achieve the corresponding sub-goals, in this example services capable of "booking flights", services capable of "booking hotels" and services capable of "booking rental cars". It is possible that further services offering further information about travel booking are discovered and returned to the proxy component. Furthermore, it is possible that two or more of those services are already semantically combined and merely some services are still left open for discovery. The services can then be registered within a list. Afterwards, the proxy component composes an executable service based on the specific predefined goal with the selected services stored within the list. The executable service is then executed by invoking first a mediation unit of the semantic web service environment before invoking a real web service as a part of the composed service. The execution results are then returned to the travel portal which has called the proxy component first.

It has to be noted that the execution environment calls the proxy component instead of a real web service. The processes performed by the proxy component, namely discovering, selecting and invoking an appropriate semantic web service, are completely transparent to the execution environment. For the execution environment all this functionality is hidden behind a simple web service call.

It is possible that the step of composing the executable service comprises a step of invoking a mediation unit to enable interoperability of the selected services. That means that during composing of an executable script, for example, invocations to a mediation unit need to be inserted. After discovery, for each sub-goal a list of appropriate semantic web services stored within a selection unit of the proxy component is available for achieving that sub-goal. Among those services, one is selected for each sub-goal. In a further step, a composition unit of the proxy component compares the different services which have to be composed. The in-and output formats of the services are checked. It is possible that the different services match among each other. At best the in- and output formats are identical. In that case the services can be written one after the other within an appropriate script so that they can easily be performed successively when executing that executable script.

In a second case, the in- and output formats of the different services do not match among each other. In that case, the composition unit adds a call to an external mediation unit within the corresponding script of the executable service, namely between the services.

In still another possible embodiment of the present invention the step of selecting services among the semantic web services can comprise a calculation of conformance of the selectable services with predefined selection criteria. Those selection criteria can also be user preferences.

The present invention further provides a proxy component for integrating semantic web services into at least one existing web service infrastructure. The proxy component comprises a selection unit for selecting services among the semantic web services based on a predefined goal, a composition unit for composing an executable service from the selected services and an execution unit for executing the executable service.

The proxy component is locatable between a semantic web service environment and an existing web service infrastructure and accessible by an execution environment of the existing web service infrastructure.

It is possible that the proxy component comprises a controller for controlling the selection unit, the composition unit and/or the execution unit.

Furthermore, it is possible, that the proxy component has access to an external discovery unit and an external mediation unit. The external discovery unit and the external mediation unit are part of a semantic web service environment. Both can also be semantic web services themselves.

Furthermore, there is a pool of semantic web services to which the proxy component has access. The proxy component is specific for a certain kind of semantic web services. An execution environment calling the proxy component can thereby achieve a predefined specific goal. For each goal, a specific proxy component can be called in order to find or to create a semantic web service to achieve this predefined goal.

Furthermore, it is possible that the selection unit of the proxy component according to the present invention comprises a calculation unit for calculating conformance of selectable services with predefined selection criteria. Those selected criteria can also correspond to certain specific user references.

The present invention further relates to a system comprising semantic web services, an existing web service infrastructure and a proxy component according to the present invention and described before. Within a system according to the present invention the proxy component is placed between the semantic web services and an execution environment of the existing web service infrastructure.

The present invention also deals with a computer program product with a computer-readable medium and a computer program stored on the computer-readable medium with a program code which is suitable for carrying out a method comprising at least the following steps:
- selecting semantic web services among a pool of semantic web services based on a predefined goal,
- composing an executable service from the selected services,
- executing the executable service, and
- returning the result of the execution to an invoking execution environment.

The present invention also refers to a computer program with a program code which is suitable for carrying out a method comprising at least the following steps:
- selecting semantic web services among a pool of semantic web services based on a predefined goal,
- composing an executable service from the selected services,
- executing the executable service, and
- returning the result of the execution to an invoking execution environment.

Furthermore, the present invention refers to an appropriate computer-readable medium with a computer program stored thereon, the computer program comprising a program code which is suitable for carrying out a method comprising at least the following steps:
- selecting semantic web services among a pool of semantic web services based on a predefined goal,
- composing an executable service from the selected services,
- executing the executable service, and
- returning the result of the execution to an invoking execution environment.

Further features and embodiments of the invention will become apparent from the description and the accompanying drawings.

For purposes of clarity, the present discussion refers to an abstract example of a web service environment. However, the method and the system of the present invention may operate with a wide variety of types of network systems including networks and communication systems dramatically different from the specific example illustrated in the following drawings.

It should be understood that while the invention is described in terms of a specific system, that the invention has applications in a variety of communication systems, such as advanced cable-television systems, advanced telephone networks or any other communication system that would benefit from the system or the method according to the present invention. It is intended that the system as used in the specification and claims be reached to cover any communication system unless the context requires otherwise.

The invention is schematically illustrated in the drawings by way of example and is hereinafter explained in detail with reference to the drawings.

### Brief description of the Drawings

In the drawings,
Figure 1 is a sequence diagram of one embodiment of the method of the present invention;
Figure 2 shows a flowchart of a further embodiment of the method according to the present invention.

### Detailed Description

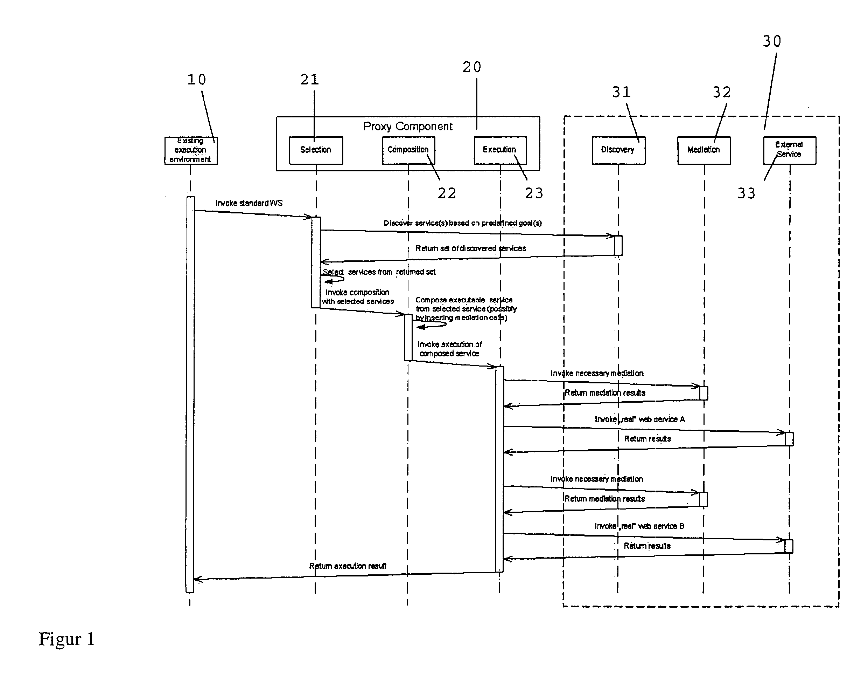

Figure 1 shows a simplified view of a method and a proxy component according to the present invention. It is shown an execution environment 10 as part of an existing web service infrastructure. Furthermore, a proxy component 20 is shown. The proxy component 20 is placed between the execution environment 10 and a semantic web service environment 30. Within the semantic web service environment 30 a discovery unit 31, a mediation unit 32 and a pool of semantic web services 33 are arranged. The proxy component 20 comprises a selection unit 21, a composition unit 22 and an execution unit 23. Generally there is also a controller within the proxy component 20, which is not shown within figure 1. Such a controller controls the execution of the selection, composition and execution of the proxy component 20. The execution environment 10 invokes the proxy component 20 in order to achieve a predefined goal. The execution environment 10 calls the proxy component 20 instead of a real standard web service. The following described processes performed by the proxy component 20, namely discovering, selecting and invoking an appropriate semantic web service, are completely transparent to the execution environment 10. For the execution environment 10 all this functionality is hidden behind a simple standard web service call.

Such a goal could be for example "book travel". In order to create a travel booking service the selection unit 21 of the proxy component 20 first discovers services based on that predefined goal by invoking the discovery unit 31. Probably the overall goal "book travel" has to be decomposed into specific adequate sub-goals. In case of "book travel", these sub-goals might be "book flight", "book hotel" and "book rental car". For each of said sub-goals the discovery unit 31 returns a set of discovered adequate services adapted to the particular sub-goals of the predefined goal. The selection unit 21 now selects services from the returned set of discovered services and invokes, in a next step, the composition unit 22 with the selected services. It is possible that the selected services are deposited by the selection unit 21 into a list.

Furthermore, it is possible that the selection unit 21 calculates conformance of the selected services with selection criteria or user preferences. The composition unit 22 composes now an executable service from the selected services. A script can be written according to which the executable service can be performed. It is possible that the composition unit 22 installs mediation calls in order to guarantee interoperability of the selected services. After having composed an executable service which can be done in form of a script, the composition unit 22 invokes the execution unit 23 for executing the composed service. The execution unit 23 invokes for executing the composed service the mediation unit 32 for a necessary mediation. The mediation unit 32 is needed to cope with heterogeneity on both, data and process level. The mediation unit 32 will execute mappings between different data formats and processes that are created during design time. It is possible that the different semantic web services which have to be executed successively use or are written in different formats which are not compatible. The "booking flight"-service can use for example a date format as "day.month.year" while the "booking hotel"-service provides the date as "monthdayyear". In such a case the mediation unit 32 has to match and consorted the different formats. After mediation the execution unit 23 invokes a corresponding real semantic web service from the pool 33 of semantic web services. In case that this semantic web service do not already cover exactly the whole service for achieving the predefined goal, the execution unit 23 invokes a further real semantic web service from the pool 33 of semantic web services according to the script of the composed executable service in order to complete the composed service for achieving the predefined goal. Than the execution unit 23 returns the execution result to the execution environment 10, which has called the proxy component 20 for achieving the predefined goal.

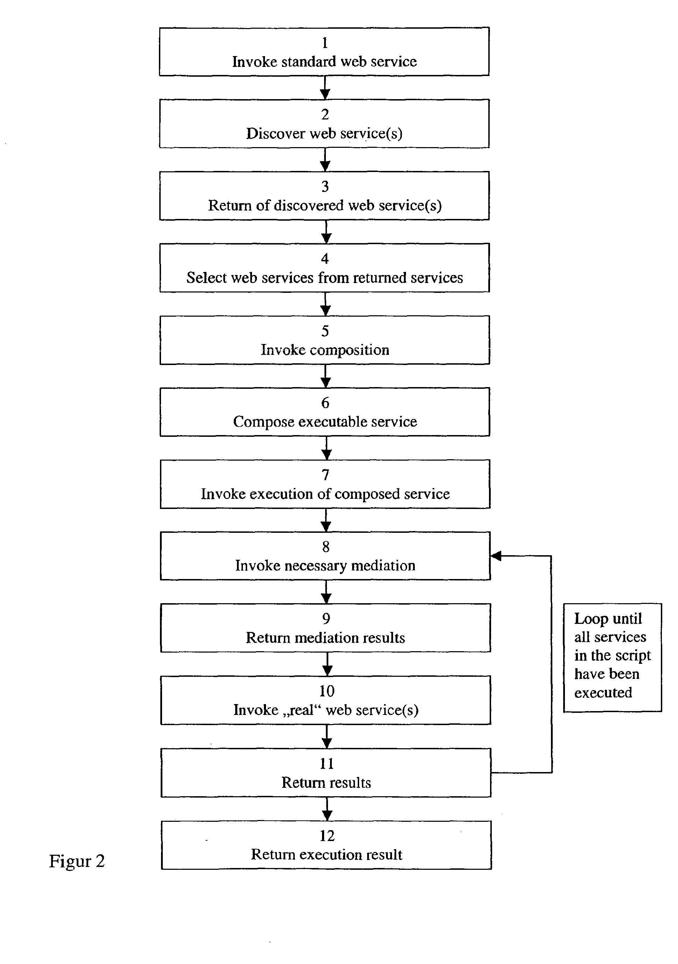

Referring to figure 2, a further specific example is illustrated by means of a schematic flowchart. In step 1 an execution environment of an existing service environment invokes a standard web service in order to achieve a specific goal as for example "cook lunch". Because of lack of such a web service within the existing web service environment a proxy component is invoked instead, in order to achieve the goal "cook lunch". It has to be noted that the execution environment calls the proxy component instead of a real web service. The processes performed by the proxy component are completely transparent to the execution environment. For the execution environment all this functionality is hidden behind a simple web service call. The proxy component calls in step 2 a discovery unit to look for web services, which obey the predefined goal, i.e. web services for cooking. It is possible that the goal is first decomposed in sub-goals as for example "cooking recipes" and "buying opportunities (groceries)". The discovery unit itself may be semantic if it provides not only a list of appropriate web services, but also information about the precise content of those services, i.e. vegetarian recipes or proposals for corresponding specific buying opportunities (groceries) to get the ingredients for the corresponding recipes. In that case the discovery unit represents a semantic web service itself. The discovery unit returns in step 3 a list of web services concerning lunch recipes and a list of services about groceries back to the proxy component.

Based on the predefined goal a selection unit of the proxy component identifies in step 4 those services which achieve specific sub-goals as for example "only vegetarian recipes" or "buy only in groceries situated near a given home". The selection unit either uses semantic information already given by the discovery unit (e.g. vegetarian recipes, specific stores) or searches for an adequate recipe/store combination within the lists of services returned by the discovery unit. From that procedure, a list of services that have to be invoked according to a specific sequence, results. That list is forwarded in step 5 to a composition unit.

The composition unit generates in step 6 an executable service, e.g. in form of a script. The composition unit may identify the need for invoking a mediation unit because of incompatibilities between the selected services in the list. It therefore adds calls to an external mediation component into the executable script. Note that there might be a number of mediation services available resulting in discovery and selection steps for the mediation component as described before.

Finally, an execution unit is invoked in step 7 which executes the executable service by invoking each service in the script. Therefore, in step 8 the mediation unit is invoked if necessary which returns in step 9 the corresponding mediation results. In step 10 the listed external services are invoked. The result, as for example a recipe together with an appropriate grocery, is returned in step 11 to the proxy component. When all steps within the script have been executed the proxy component returns the result finally in step 12 to the execution environment.

In the following, a pseudo-code explains a further embodiment of the method according to the present invention. It describes functionality of a controller, which is located inside the proxy component in order to control the execution of the selection, composition and execution of the proxy component.

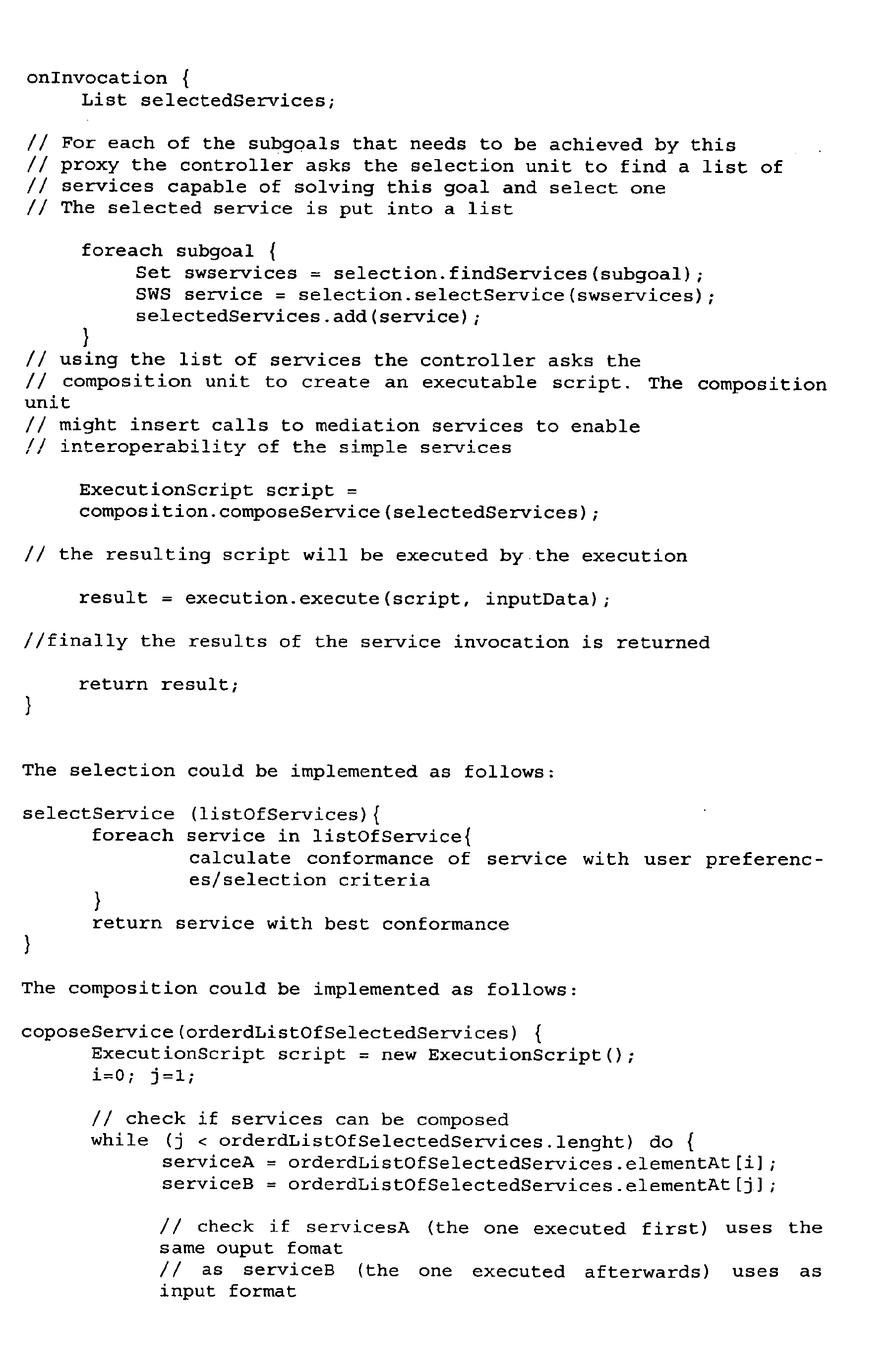

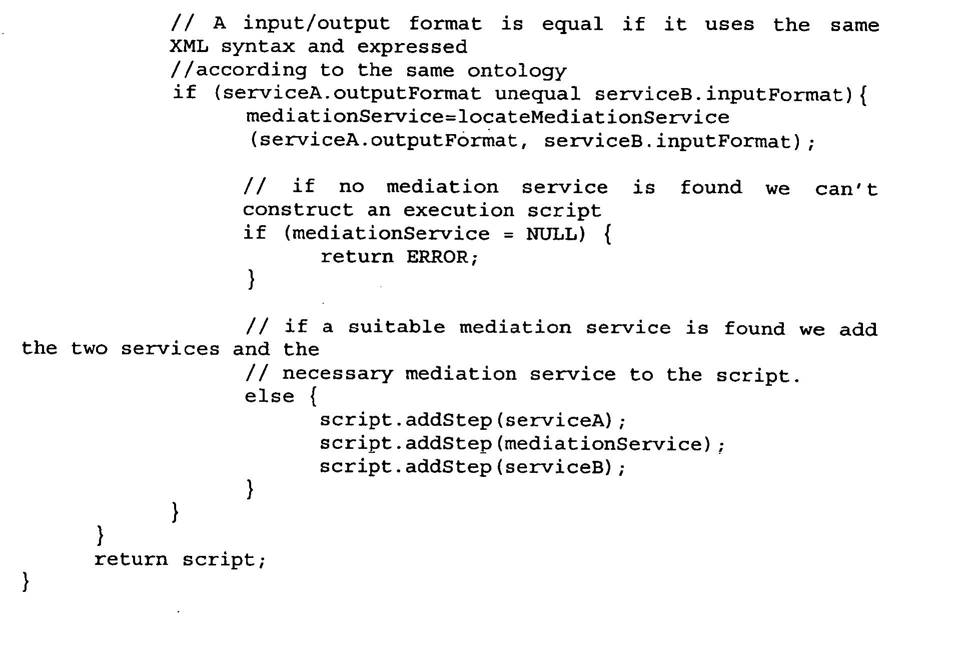

## Claims

1. A method for integrating semantic web services into at least one existing web service infrastructure with an execution environment (10) by placing a proxy component (20) between the execution environment of the existing web service infrastructure and the semantic web services (30) so that the execution environment (10) invoking the proxy component (20) can interact with semantic web services, the proxy component (20) selecting services among the semantic web services based on a predefined goal, composing an executable service from the selected services, executing the executable service and returning the result of the service execution to the execution environment (10).

2. The method according to claim 1, wherein the executable service is described by an appropriate script specifying a sequence of operations to be performed.

3. The method according to claim 1 or 2, wherein the predefined goal is decomposed into several sub-goals.

4. The method according to any one of the preceding claims, wherein the step of selecting services among the semantic web services comprises a step of invoking a discovery unit (31) and a step of listing the selected services within a list stored by the proxy component (20).

5. The method according to any one of the preceding claims, wherein the step of composing the executable service from the selected services comprises a step of invoking a mediation unit (32) to enable interoperability of the selected services.

6. The method according to any one of the preceding claims, wherein the step of selecting services among the semantic web services comprises a calculation of conformance of the selectable services with predefined selection criteria.

7. A proxy component for integrating semantic web services into at least one existing web service infrastructure, comprising
a selection unit (21) configured to select services among the semantic web services based on a predefined goal,
a composition unit (22) configured to compose an executable service from the selected services and
an execution unit (23) configured to execute the executable service.

8. The proxy component according to claim 7, which is locatable between a semantic web service environment (30) and an existing web service infrastructure and which is accessible by an execution environment (10) of the existing web service infrastructure.

9. The proxy component according to claim 7 or 8, further comprising a controller configured to control the selection unit, the composition unit and/or the execution unit.

10. The proxy component according to any one of the claims 7 to 9, the proxy component (20) having access to an external discovery unit (31) and an external mediation unit (32).

11. The proxy component according to any one of the claims 7 to 10, wherein the selection unit (21) further comprises a calculation unit configured to calculate conformance of selectable services with predefined selection criteria.

12. A system comprising semantic web services, an existing web service infrastructure and a proxy component according to any one of the claims 7 to 11, wherein the proxy component (20) is placed between the semantic web services (30) and an execution environment (10) of the existing web service infrastructure.

13. A computer program product with a computer-readable medium and a computer program stored on the computer-readable medium with a program code which is suitable for carrying out a method comprising at least the following steps:
- selecting semantic web services among a pool of semantic web services based on a predefined goal,
- composing an executable service from the selected services,
- executing the executable service, and
- returning the result of the execution to an invoking execution environment.

14. A computer program with a program code which is suitable for carrying out a method comprising at least the following steps:
- selecting semantic web services among a pool of semantic web services based on a predefined goal,
- composing an executable service from the selected services,
- executing the executable service, and
- returning the result of the execution to an invoking execution environment.

15. A computer-readable medium with a computer program stored thereon, the computer program comprising a program code which is suitable for carrying out a method comprising at least the following steps:
- selecting semantic web services among a pool of semantic web services based on a predefined goal,
- composing an executable service from the selected services,
- executing the executable service, and
- returning the result of the execution to an invoking execution environment.

## Amended claims

### Amended claims in accordance with Rule 86(2) EPC.

**1.** A method for integrating semantic web services into at least one existing web service infrastructure with an execution environment (10) by placing a goal specific proxy component (20) between the execution environment of the existing web service infrastructure and the semantic web services (30) so that the execution environment (10) invoking the proxy component (20) via a web service call can interact with semantic web services, the proxy component (20) selecting services among the semantic web services based on the predefined specific goal, composing an executable service from the selected services, executing the executable service by first invoking a mediation unit of the semantic web service environment before invoking a service as part of the composed service and returning the result of the service execution to the execution environment (10).

**2.** The method according to claim 1, wherein the executable service is described by an appropriate script specifying a sequence of operations to be performed.

**3.** The method according to claim 1 or 2, wherein the predefined goal is decomposed into several sub-goals.

**4.** The method according to any one of the preceding claims, wherein the step of selecting services among the semantic web services comprises a step of invoking a discovery unit (31) and a step of listing the selected services within a list stored by the proxy component (20).

**5.** The method according to any one of the preceding claims, wherein the step of composing the executable service from the selected services comprises a step of invoking a mediation unit (32) to enable interoperability of the selected services.

**6.** The method according to any one of the preceding claims, wherein the step of selecting services among the semantic web services comprises a calculation of conformance of the selectable services with predefined selection criteria.

**7.** A proxy component for integrating semantic web services into at least one existing web service infrastructure so as to achieve a predefined specific goal when the proxy component is invoked via a web service call, the proxy component comprising
a selection unit (21) configured to select services among the semantic web services based on the predefined goal,
a composition unit (22) configured to compose an executable service from the selected services in form of a script, and
an execution unit (23) configured to execute the executable service by invoking the selected web services according to the script of the composed service, wherein the composition unit might if necessary insert calls to a mediation unit into the script to enable interoperability of the selected web services.

**8.** The proxy component according to claim 7, which is locatable between a semantic web service environment (30) and an existing web service infrastructure and which is accessible by an execution environment (10) of the existing web service infrastructure.

**9.** The proxy component according to claim 7 or 8, further comprising a controller configured to control the selection unit, the composition unit and/or the execution unit.

**10.** The proxy component according to any one of the claims 7 to 9, the proxy component (20) having access to an external discovery unit (31) and an external mediation unit (32).

**11.** The proxy component according to any one of the claims 7 to 10, wherein the selection unit (21) further comprises a calculation unit configured to calculate conformance of selectable services with predefined selection criteria.

**12.** A system comprising semantic web services, an existing web service infrastructure and a proxy component according to any one of the claims 7 to 11, wherein the proxy component (20) is placed between the semantic web services (30) and an execution environment (10) of the existing web service infrastructure.

**13.** A computer program product with a computer-readable medium and a computer program stored on the computer-readable medium with a program code which is suitable for carrying out a method comprising at least the following steps:
- selecting semantic web services among a pool of semantic web services based on a predefined goal,
- composing an executable service from the selected services,
- executing the executable service, and
- returning the result of the execution to an invoking execution environment.

**14.** A computer program with a program code which is suitable for carrying out a method comprising at least the following steps:
- selecting semantic web services among a pool of semantic web services based on a predefined goal,
- composing an executable service from the selected services,
- executing the executable service, and
- returning the result of the execution to an invoking execution environment.

**15.** A computer-readable medium with a computer program stored thereon, the computer program comprising a program code which is suitable for carrying out a method comprising at least the following steps:
- selecting semantic web services among a pool of semantic web services based on a predefined goal,
- composing an executable service from the selected services,
- executing the executable service, and
- returning the result of the execution to an invoking execution environment.
